Europäisches Patentamt

(19) European Patent Office

Office européen des brevets

(11) Numéro de publication: **0 117 796**
**B1**

(12) **FASCICULE DE BREVET EUROPÉEN**

(45) Date de publication du fascicule du brevet:
**20.05.87**

(21) Numéro de dépôt: **84400245.1**

(22) Date de dépôt: **06.02.84**

(51) Int. Cl.⁴: **F 24 D 11/02,** G 05 D 23/19,
**F 24 D 19/10**

(54) Installation de climatisation d'une construction.

(30) Priorité: **07.02.83 FR 8301888**

(43) Date de publication de la demande:
**05.09.84 Bulletin 84/36**

(45) Mention de la délivrance du brevet:
**20.05.87 Bulletin 87/21**

(84) Etats contractants désignés:
**AT BE CH DE GB IT LI LU NL SE**

(56) Documents cité:
**EP-A-0 017 975**
**EP-A-0 053 497**
**EP-A-0 054 729**
**FR-A-2 517 414**
**GB-A-1 482 518**

(73) Titulaire: **Transformation d'Idées en Produits Industrialisables et Commercialisables (T.I.P.I.C.), 27 rue du Haut des Sables, F-86000 Poitiers (FR)**

(72) Inventeur: **Maimi, René, 30 Avenue Impératrice Joséphine, F-92500 Rueil Malmaison (FR)**

(74) Mandataire: **Ramey, Daniel, Cabinet M. SABATIER 83 avenue Foch, F-75116 Paris (FR)**

EP 0 117 796 B1

LIBER, STOCKHOLM 1987

**Description**

L'invention concerne une installation de climatisation d'une construction, principalement un immeuble d'habitation; elle a été plus particulièrement conçue pour stocker et gérer économiquement les apports calorifiques d'origines diverses produits ou récupérés gratuitement, notamment l'énergie calorifique d'origine solaire, l'énergie contenue dans l'air ou encore l'énergie de condensation de la vapeur d'eau.

L'augmentation du prix des combustibles a imposé de réaliser des économies d'énergie dans tous les domaines, notamment le chauffage. On a commencé par mettre au point des systèmes de régulation agissant sur les débits de combustibles utilisés (fuel ou gaz naturel). Puis on s'est intéressé aux sources d'énergie gratuite comme particulièrement l'énergie solaire. Parallèlement, le développement des pompes à chaleur permet de puiser des calories utilisables pour le chauffage dans des sources à basse température.

On connaît, par le document GB-A-1 482 518, une installation de climatisation d'une habitation, comprenant un capteur solaire associé à une première cuve de stockage de chaleur dans laquelle se trouve l'évaporateur d'une pompe à chaleur. Le condenseur de cette pompe est logé dans une seconde cuve de stockage de chaleur alimentant un ballon d'eau chaude et un réseau de chauffage. La pompe à chaleur permet de prélever de la chaleur dans la première cuve pour la stocker à température plus élevée dans la seconde cuve. Cependant, aucun moyen n'est prévu pour optimiser le fonctionnement de la pompe à chaleur, dont les performances et la consommation d'énergie varient beaucoup en fonction des conditions de fonctionnement de l'esemble de l'installation (température extérieure, températures dans les cuves de stockage, besoins en eau chaude).

Le document EP-A-0 017 975 décrit une autre installation de climatisation d'une habitation, comprenant un ensemble de capteurs solaires, des réservoirs de stockage de chaleur qui sont du type à chaleur latente de changement d'état pour stocker chacun de la chaleur à une température prédéterminée différente, un réseau de chauffage relié à ces réservoirs et aux capteurs solaires, une pompe à chaleur, et un microprocesseur pour commander le fonctionnement de l'ensemble de l'installation en chargeant ou en déchargeant successivement les réservoirs de stockage de chaleur, soit directement, soit par l'intermédiaire de la pompe à chaleur. Cette installation connue a l'inconvénient d'être très complexe. De plus, aucun moyen spécifique n'est prévu pour réduire et optimiser le fonctionnement de la pompe à chaleur, qui est commandé par le microprocesseur essentiellement en fonction des besoins.

L'invention a pour objet une installation de climatisation d'une construction, qui permette non seulement d'optimiser le fonctionnement et les performances d'une pompe à chaleur, mais également de réduire le coût de sa consommation en énergie en imposant une réduction de son fonctionnement pendant les heures de jour et en forçant son fonctionnement pendant les heures de nuit pour profiter des périodes de tarif réduit de l'électricité.

L'invention propose une installation de climatisation, par exemple d'un immeuble comprenant un réseau de chauffage à circulation de fluide caloporteur, alimenté par une cuve de stockage de chaleur à haute température, une pompe à chaleur reliant cette cuve à une cuve de stockage de chaleur à basse température, et un moyen de captation de chaleur, tel qu'un agencement de capteurs solaires, relié par un circuit de fluide caloporteur à la cuve de stockage de chaleur à basse température, caractérisée en ce que la pompe à chaleur et des pompes de circulation du fluide des cuves dans des circuits primaire et secondaire respectivement de la pompe à chaleur, sont pilotées par un circuit de commande de mise en service comprenant une sonde de température placée dans la cuve à haute température et un moyen de comparaison entre la grandeur de sortie de cette sonde et une grandeur représentative d'une température minimum, et par un circuit de commande de mise hors service comprenant une sonde de température (éventuellement la même que précitée) et un moyen de comparaison entre la grandeur de sortie de cette sonde et une grandeur représentative de la température minimum augmentée d'une valeur prédéterminée, l'installation comprenant de plus des moyens, tels par exemple qu'un amplificateur inverseur relié à une sonde de température placée à l'extérieur de la construction, pour faire varier la température minimum en fonction inverse de la température extérieure, et des moyens pour forcer le fonctionnement de la pompe à chaleur pendant des périodes de tarif réduit du réseau de distribution électrique jusqu'à ce qu'une sonde de température placée dans la cuve de stockage de chaleur à haute température fournisse une grandeur de sortie représentative d'une température maximum.

Grâce à l'invention, la différence de température entre les deux cuves est maintenue à une valeur minimale pendant les heures de jour, ce qui se traduit par une optimisation et une réduction du fonctionnement de la pompe à chaleur, tandis que, pendant les heures de nuit, on met à profit le tarif réduit de l'énergie électrique pour forcer le fonctionnement de la pompe à chaleur et relever la température de la cuve chaude à une valeur maximum.

La présence des deux cuves de stockage de chaleur en amont et en aval de la pompe à chaleur permet notamment d'utiliser une pompe à chaleur du type eau-eau du commerce, c'est à dire le type de pompe à chaleur actuellement connu pour être le moins cher et le plus efficace. Dans ces conditions, le premier liquide précité est de l'eau qui est admise à circuler dans le circuit primaire tandis que le second liquide précité est aussi de l'eau admise à circuler dans le circuit secondaire. Lorsqu'on utilise un agencement de capteurs d'énergie solaire, il est souhaitable d'utiliser de l'eau glycolée dans la cuve de stockage à basse température et par conséquent dans le circuit primaire de la pompe à chaleur.

L'invention sera mieux comprise et d'autres avantages de celle-ci apparaîtront mieux à la lumière de la description qui va suivre d'une installation actuellement préférée conforme aux principes de l'invention, donnée uniquement à titre d'exemple et faite en référence aux dessins annexés dans lequels:

- La figure 1 est un schéma général de l'invention;

- La figure 2 est une vue schématique en élévation de la cuve de stockage de chaleur à basse température;

- La figure 3 est une vue schématique en élévation de la cuve de stockage de chaleur à haute température; et

- La figure 4 est un schéma général des parties essentielles d'un système de gestion contrôlant à la fois le processus de récupération de l'énergie solaire et le transfert des calories, organisé par la pompe à chaleur, jusqu'au réseau de chauffage.

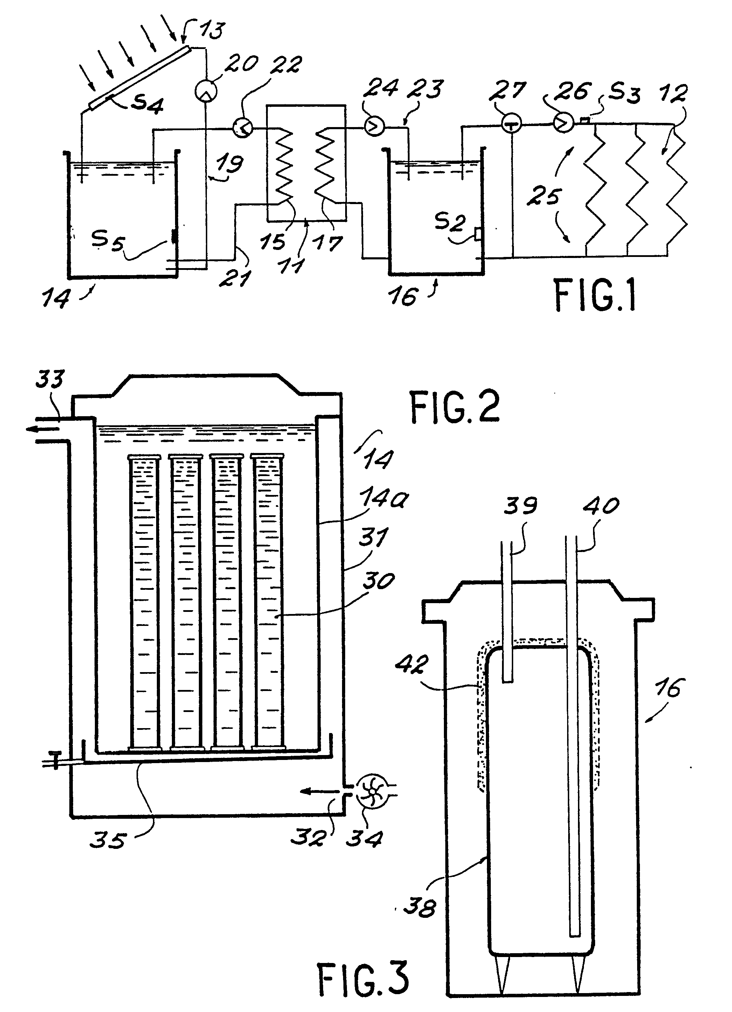

En se référant à la figure 1, l'installation comprend une pompe à chaleur 11, du type eau-eau, un réseau de chauffage central 12 à circulation d'eau et un agencement de capteurs d'énergie solaire 13 placé par exemple en lieu et place de la toiture d'un immeuble. Les capteurs solaires utilisés peuvent être par exemple des capteurs dits "convectifs" du type décrit dans la demande de brevet français 2 517 414 déposé le 2 décembre 1981. Le réseau de chauffage 12 est de préférence un réseau à basse température et large surface d'échange thermique. Les systèmes de chauffage par le sol sont particulièrement recommandés pour cette application. Selon une particularité importante de l'invention, l'installation comprend une cuve de stockage de chaleur à basse température 14 remplie d'un premier liquide, interconnectée entre l'agencement de capteurs 13 et le circuit primaire 15 de la pompe à chaleur et une cuve de stockage de chaleur à haute température 16 remplie d'un second liquide, interconnectée entre le circuit secondaire 17 de la pompe à chaleur et le réseau de chauffage 12. Le premier liquide cité est de l'eau glycolée, la température de fonctionnement pouvant être inférieure à 0° C, dans certains cas. Le circuit primaire 15 de la pompe à chaleur admet parfaitement de fonctionner avec ce mélange. Le second liquide cité est de l'eau douce. Cependant, il est parfaitement envisageable d'utiliser d'autres mélanges liquides en fonction des applications envisagées, c'est à dire des gammes de températures désirées en amont et en aval de la pompe à chaleur.

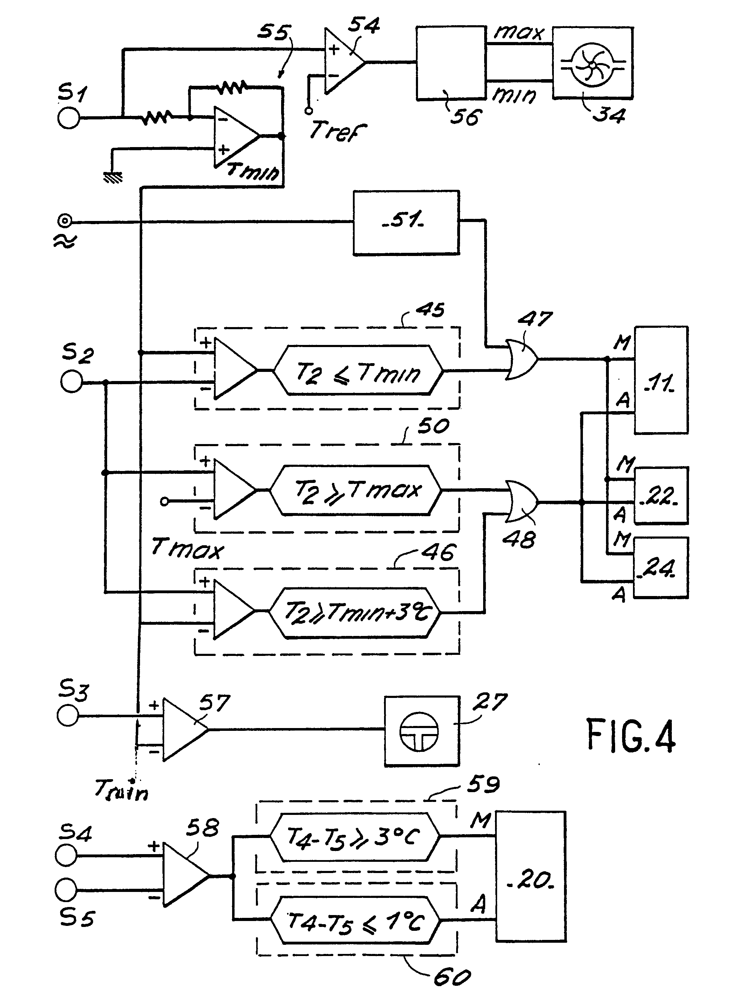

L'installation est complétée par un circuit de circulation 19 de l'eau glycolée entre la cuve 14 et l'agencement de capteurs 13, comprenant une pompe de circulation 20; un circuit de circulation 21 de l'eau glycolée entre la cuve 14 et ledit circuit primaire 15, comprenant une pompe de circulation 22, un circuit de circulation 23 de l'eau douce entre ledit circuit secondaire 17 et la cuve 16, comprenant une pompe de circulation 24 et un circuit de circulation 25 entre la cuve 16 et le réseau de chauffage 12, comprenant une pompe de circulation 26 et une vanne de mélange à trois voies 27, commandée, à action proportionnelle. Cette vanne est branchée entre la cuve 16 et le réseau 12 d'une part et en parallèle sur ce dernier d'autre part (c'est à dire entre le conduit de départ d'eau chaude et le conduit de retour vers la cuve 16) pour assurer un mélange en proportion variable entre de l'eau à la température de la cuve 16 et de l'eau refroidie après son passage dans le réseau de chauffage 12. On peut ainsi réguler la température de l'eau qui circule dans ce réseau de chauffage en fonction de la température désirée dans les locaux. Le mode de régulation de la température sera expliqué plus loin en référence à la figure 4. Le circuit de circulation 19 puise l'eau glycolée à la partie basse de la cuve 14 et restitue l'eau réchauffée par les capteurs en partie haute de cette même cuve. Les différentes pompes 20, 22, 24 et 26 sont commandées par un système de gestion qui contrôle la consommation optimale des calories stockées dans la cuve 16 et le transfert des calories depuis la cuve 14 jusqu'à la cuve 16 (mise en fonctionnement de la pompe à chaleur) ainsi que le renouvellement de la quantité de chaleur accumulée à basse température dans la cuve 14, en fonction notamment des apports d'origine solaire. Ce système de gestion est piloté automatiquement par des grandeurs de consigne (affichées par l'utilisateur) et par un certain nombre de sondes de température placées en différents points. On distingue notamment une sonde de température extérieur S1 (figure 4) placée à l'extérieure des locaux à climatiser, une sonde de température S2 placée dans la cuve de stockage de chaleur à haute température 16, une sonde de température S3 en contact thermique avec un point choisi du réseau de chauffage, une sonde de température S4 en contact thermique avec l'agencement de capteurs 13 et une sonde de température S5 placée dans la cuve de stockage de chaleur à basse température 14. Ce système de gestion sera décrit plus particulièrement en référence à la figure 4.

La figure 2 montre une structure avantageuse utilisable en tant que cuve 14. Elle comporte un récipient 14a renfermant un conteneur 30 à grande surface d'échange thermique (il s'agit dans l'exemple représenté d'un faisceau de tubes fermés) immergé dans l'eau glycolée de la cuve (c'est à dire dans le premier liquide précité) et rempli d'un liquide à point de congélation plus élevé que ledit premier liquide. Lorsque le premier liquide précité est de l'eau glycolée, le conteneur 30 peut être simplement rempli d'eau douce. Ainsi, la capacité de stockage à basse température de la cuve 14 se trouve considérablement augmentée par le fait que, en l'absence d'apport d'énergie calorifique suffisant, la pompe à chaleur peut continuer à puiser des calories dans la cuve 14 en gelant l'eau contenue dans le conteneur 30, laquelle restitue alors sa chaleur latente de changement d'état.

En outre, un moyen de captation de chaleur supplémentaire est constitué par la cuve 14 elle-même. En effet, la paroi externe du récipient 14a est en contact thermique avec un circuit de renouvellement d'air de l'immeuble. Plus précisément, ce récipient 14a est lui-même logé dans une enceinte 31 comportant un orifice d'entrée d'air 32 connecté au réseau de renouvellement d'air de l'immeuble et un orifice d'évacuation d'air 33 pour rejeter cet air à l'extérieur de l'immeuble. Un moyen de ventilation 34 force l'air vicié et chargé d'humidité de l'immeuble à traverser l'enceinte 31 en étant en contact thermique avec la paroi froide du récipient 14a. Par ce moyen simple, l'air vicié cède donc la plus grande partie de sa chaleur à la cuve de stockage de chaleur à basse température avant d'être rejeté à l'extérieur. La condensation sur la paroi du récipient 14a est recueillie dans un bac inférieur 35 et évacuée de l'enceinte 31.

La figure 3 montre la structure de la cuve de stockage de chaleur à haute température 16. On voit en particulier que cette cuve renferme un ballon d'eau chaude sanitaire 38 qui se trouve donc immergé dans le second liquide précité (c'est à dire dans l'eau chaude utilisée pour alimenter aussi le réseau de chauffage 12) et chauffé par lui. L'eau chaude sanitaire est puisée à la partie supérieure du ballon (conduit 39) et de l'eau froide du réseau de distribution est admise en remplacement à la partie inférieure (conduit 40) pour être réchauffée par l'eau de la cuve 16. La portion supérieure du ballon d'eau chaude 38 est recouverte d'un revêtement d'isolation thermique 42, permettant de maintenir la température de l'eau sanitaire qui est sur le point d'être utilisée à un niveau élevé relativement indépendant de la température qui règne dans la cuve 16.

Avantageusement, la cuve 14 peut être placée dans les combles, ce qui permet, pour certains types de capteurs, de sous-dimensionner la pompe de circulation 20 (qui est celle qui est le plus souvent sollicitée) tandis que la pompe à chaleur et la cuve chaude peuvent être placées à un niveau inférieur de l'immeuble, voire en sous sol, pour favoriser au maximum les phénomènes de thermo-siphonage naturels.

Il est aussi possible d'alimenter la cuve de stockage à haute température 16 avec des calories provenant de moyens de chauffage annexes, autres que la pompe à chaleur. Ainsi, si l'habitation est munie d'une cheminée d'agrément, celle-ci pourra avantageusement être équipée d'un bouilleur d'être thermiquement couplé à la cuve 16.

La figure 4 illustre les aspects essentiels du système de gestion. Pour faciliter la compréhension, la pompe à chaleur 11 et les pompes de circulation 20, 22 et 24 de la figure 1 ont été schématisées par des blocs munis chacun d'une entrée de commande de mise en service M et d'une entrée de commande de mise hors service A. Autrement dit, un signal de commande appliqué à une entrée M commande la mise en marche de la pompe à chaleur ou de la pompe de circulation correspondante tandis qu'un signal de commande appliqué à une entrée A en commande l'arrêt.

La sonde S2 fournit un signal de sortie représentatif de la température dans la cuve 16 à deux moyens comparateurs 45 et 46 appartenant respectivement à un circuit de commande de mise en service de la pompe à chaleur, pilotant l'entrée M de celle-ci et les entrées M des pompes de circulation 22 et 24 et à un circuit de mise hors service de la pompe à chaleur, pilotant les entrées a correspondantes. Le moyen comparateur 45 compare la grandeur de sortie de la sonde S2 à une grandeur T min représentative d'une température minimum admissible tandis que le moyen comparateur 46 compare la grandeur de sortie de la sonde S2 à une grandeur représentative de cette même grandeur T min augmentée d'une valeur prédéterminée, par exemple représentative de 3° C. Autrement dit, si le moyen comparateur 45 enregistre la condition T (S2) ⩽ T min, un signal de commande est appliqué par lui (via la porte OU 47) aux entrées M de la pompe à chaleur et des pompes de circulation 22 et 24. Si le moyen comparateur 46 enregistre la condition: T (S2) ⩾ T min + 3°, un signal de commande est appliqué par lui (via la porte OU 48) aux entrées A correspondantes.

Un moyen comparateur 50 compare la grandeur de sortie de la sonde S2 à une grandeur T max représentative d'une température maximum admise. Sa sortie est appliquée à une entrée de la porte OU 48, pour appliquer un signal de commande aux entrées A de la pompe à chaleur et des pompes de circulation 22 et 24. Par ailleurs, un détecteur 51, connu en soi, est couplé au réseau de distribution électrique pour en déterminer les périodes de tarif réduit (actuellement la nuit) et sa sortie est reliée à une entrée de la porte OU 47 pour piloter la mise en service de la pompe à chaleur et des pompes de circulation 22 et 24. Ainsi, le détecteur 51 et le moyen comparateur 50 constituent des moyens pour forcer le fonctionnement de la pompe à chaleur pendant des périodes de tarif réduit du réseau de distribution électrique jusqu'à ce que la température de l'eau dans la cuve 16 atteigne une valeur maximum prédéterminée.

D'autre parti la grandeur T min est avantageusement rendue variable en raison inverse de la température extérieure mesurée par la sonde S1. La loi de variation inverse, de préférence linéaire, est par exemple établie par un circuit amplificateur inverseur 55 recevant à son entrée inverseuse le signal de la sonde S1 et dont la sortie est appliquée aux moyens comparateurs 45 et 46. La pente négative de cet amplificateur est prédéterminée en fonction, notamment, du coefficient de déperdition calorifique de la construction et du pouvoir émissif du réseau de chauffage 12.

Le fonctionnement du système de gestion qui vient d'être décrit jusqu'à présent est le suivant. En supposant que l'eau de la cuve 16 ait été portée à sa température maximum T max pendant une période de tarif réduit de l'électricité (au petit matin par exemple) la pompe à chaleur est arrêtée et le réseau de chauffage dissipe peu à peu les calories disponibles pour maintenir les locaux à une température choisie, cette régulation se faisant par le pilotage de la vanne mélangeuse 27. La température dans la cuve 16 baisse donc progressivement. Si elle atteint la température minimum T min avant la période de tarif réduit suivante, la pompe à chaleur est remise en service sous la commande du moyen comparateur 45 puis arrêtée à nouveau par le moyen comparateur 46 dès que la température de la cuve s'est à nouveau élevée de 3° au dessus de la température minimum. La température de la cuve 16 continue ainsi à évoluer légèrement au dessus de la température minimum jusqu'à la prochaîne période de tarif réduit de l'électricité, détectée par le détecteur 51. A ce moment, la pompe à chaleur est mise en service jusqu'à ce que l'eau de la cuve 16 soit à nouveau portée à la température maximum, le détecteur 51 pilantant aussi un circuit d'inhibition (non représenté) du moyen comparateur 46.

Selon un aspect avantageux de l'invention, la sonde S1 est aussi connectée à une entrée d'un comparateur 54 recevant sur son autre entrée un signal de référence T ref représentatif d'une température extérieure choisie. Ce comparateur 54 pilote un circuit de commutation 56 déterminant deux régimes de fonctionnement du moyen de ventilation 34 cité plus haut. On a en effet déterminé qu'il était possible de réduire le taux de renouvellement d'air des locaux avec l'abaissement de la température extérieure, ce qui permet de réduire les déperditions par renouvellement d'air tout en restant conforme à la législation relative à l'aération des logements. Par exemple, grâce au comparateur 54 et au circuit de commutation 56, le taux de renouvellement d'air est nominal tant que la température extérieure est supérieure à 5°C. En dessous, le taux de renouvellement d'air est réduit de moitié.

La commande de position de la vanne 27 est obtenue par un circuit de commande comprenant un comparateur 57 recevant sur une entrée le signal de la sonde S3 et sur l'autre entrée le signal de consigne T min. Le réglage de température est effectué dans chaque pièce grace à des robinets thermostatiques.

Enfin, la reconstitution du stock de calories à basse température, en ce qui concerne la contribution des capteurs solaires, est gérée indépendamment au moyen des sondes S4 et S5 reliées respectivement à deux entrées d'un comparsteur 58 pilotent des moyens de commande de le pompe de circulation 20 agencés pour que celle-ci ne fonctionne que lorsque la différence de température détectée par les sondes S4 et S5 est comprise entre deux valeurs prédéterminées. Selon un exemple d'application, la pompe 20 est mise en marche si la différence de température: $T(S4) - T(S5) \geqslant 3°C$ (circuit de test 59) et elle est arrêtée si la différence de température:
$T(S4) - T(S5) \leqslant 1°C$ (circuit de test 60).

**Revendications**

1. Installation de climatisation, par exemple d'un immeuble. comprenant un réseau [12] de chauffage à circulation de fluide caloporteur, alimenté par une cuve [16] de stockage de chaleur à haute température, une pompe à chaleur [11] reliant la cuve [16] à une cuve [14] de stockage de chaleur à basse température, et un moyen [13] de captation de chaleur, tel qu'un agencement de capteurs solaires, relié par un circuit [19] de fluide caloporteur à la cuve [14] de stockage de chaleur à basse température, caractérisée en ce que la pompe à chaleur [11] et des pompes [22, 24] de circulation du fluide des cuves [14, 16] dans des circuits primaire et secondaire respectivement de la pompe à chaleur, sont pilotées par un circuit de commande de mise en service comprenant une sonde de température [S2] placée dans la cuve [16] à haute température et un moyen [45] de comparaison entre la grandeur de sortie de cette sonde et une grandeur [Tmin] représentative d'une température minimum, et par un circuit de commande de mise hors service comprenant une sonde de température [S2] [éventuellement le même que précitée] et un moyen [46] de comparaison entre le grandeur de sortie de cette sonde et une grandeur représentative de la températeure minimum [Tmin] augmentée d'une valeur prédéterminée, l'installation comprenant de plus des moyens, tels par exemple qu'un amplificateur inverseur [55] relié à une sonde de température [S1] placée à l'extérieur de le construction, pour faire varier ladite température minimum [Tmin] en fonction inverse de la température extérieure, et des moyens [51, 50] pour forcer le fonctionnement de la pompe à chaleur pendant des périodes de tarif réduit du réseau de distribution électrique jusqu'à ce qu'une sonde de température [S2] placée dans la cuve [16] de stockage de chaleur à haute température fournisse une grandeur de sortie représentative d'une température maximum [Tmax].

2. Installation selon la revendication 1, caractérisée en ce qu'une vanne de mélange à trois voies [27] et à action proportionnelle est branchée, d'une part entre ladite cuve [16] de stockage à haute température et ledit réseau de chauffage et d'autre part en dérivation entre l'entrée et la sortie de ce dernier, cette vanne étant actionnée par un circuit de commande [57] piloté par l'intermédiaire d'une sonde de température [53] en contact thermique avec un point choisi dudit réseau de chauffage.

3. Installation selon l'une des revendications 1 et 2, caractérisée en ce qu'elle comporte en outre une sonde de tempéreture [55] placée dans ladite cuve [14] de stockage de chaleur à basse température, une sonde de température [S4] placée dans ledit agencement [13] de capteurs solaires, une pompe de circulation [20] insérée dans ledit circuit de fluide caloporteur [19] et des moyens de commande de cette pompe de circulation [59, 60] agencés pour que celle-ci ne fonctionne que lorsque la différence des températures détectées par ces deux sondes [S4, S5] est comprise entre deux valeurs prédéterminées.

4. Installation selon une des revendications précédentes, caractérisée en ce que des moyens de chauffage annexes, par exemple un bouilleur d'âtre, sont thermiquement couplés à ladite cuve [16] de stockage de chaleur à haute température.

5. Installation de climatisation selon une des revendications 1 à 4, caractérisée en ce qu un moyen de captation de chaleur précité est constitué par la cuve de stockage de chaleur à basse température elle-même, dont une paroi est en contact avec un circuit de renouvellement d'air [34, 32, 33] d'un immeuble.

6. Istallation selon la revendication 5 caractérisée en ce que ledit circuit de renouvellement d'air comporte des moyens de ventilation à débit variable [55, 56, 34] en fonction de la température extérieure.

7. Installation selon l'une des revendications précédentes, caractérisée en ce qu'un conteneur à grande surface d'échange thermique [30] est immergé dans ladite cuve [14] de stockage de chaleur à basse température et est rempli d'un liquide à point de congélaton plus élevé que celui du liquide contenu dans la cuve [14],

8. Installation selon l'une des revendications précédentes, caractérisée en ce qu'un ballon d'eau chaude sanitaire [38] est immergé dans ladite cuve [16] de stockage de chaleur à haute température et est en contact thermique avec le liquide contenu dans celle-ci.

9. Installation selon la revendication 8, caractérisée en ce qu'une portion supérieure dudit ballon d'eau chaude sanitaire est recouverte d'un revêtement d'isolation thermique [42],

10. Installation selon l'une des revendications précédentes, caractérisée en ce que ladite pompe à chaleur [11] eat du type eau-eau, en ce que la liquide contenu dans la cuve à basse température [14] est de l'eau circulant dans le circuit primaire [15] de la pompe à chaleur, éventuellement de l'eau glycolée et en ce que le liquide de le cuve à haute température [16] est aussi de l'eau circulant dans le circuit secondaire [17] de la pompe à chaleur.


**Patentansprüche**

1. Klimaanlage, beispielsweise für ein Gebäude, mit einem Heiznetz (12) mit Wärmeträgerfluidzirkulation, das von einem Hochtemperaturwärmespeicherbehälter (16) gespeist ist, einer den Behälter (16) mit einem Wärmespeicherbehälter (14) für niedrige Temperatur verbindenden Wärmepumpe (11) und einer Wärmeaufnehmereinrichtung (13), beispielsweise einer Gruppe von Solarzellen, die über einen Wärmeträgerkreis (19) mit dem Speicherbehälter (14) von niedriger Temperatur verbunden ist, dadurch gekennzeichnet, daß die Wärmeträgerpumpe (11) sowie die Fluidzirkulationspumpen (22, 24) der Behälter (14, 16) in den Primär- und Sekundärkreisen bzw. der Wärmeträgerpumpe (hilfs)gesteuert von einem Betriebseinschaltbetätigungskreis sind, der eine Temperatursonde (S2) umfaßt, die im Behälter (16) für hohe Temperatur angeordnet ist sowie eine Einrichtung (45) zum Vergleich zwischen der Ausgangsgröße dieser Sonde und einer Größe (Tmin) aufweist, welche repräsentativ für eine Minimumtemperatur ist und durch einen Betätigungskreis zur Außerbetriebstellung gesteuert ist, der eine Temperatursonde (S2) umfaßt (gegebenenfalls gleich wie erwähnt) und eine Vergleichereinrichtung (46) zwischen der Ausgangsgröße dieser Sonde und einer Größe umfaßt, die repräsentativ für die Minimumtemperatur (Tmin), erhöht um einen bestimmten Wert, ist, wobei die Anlage darüber hinaus Einrichtungen wie beispielsweise einen Inverter-Verstärker (55) aufweist, der mit einer Temperatursonde (S1) verbunden ist, die außerhalb der Konstruktion angeordnet ist, um diese Mininumtemperatur (Tmin) als umgekehrte Funktion der Außentemperatur variieren zu lassen, sowie Einrichtungen (51, 50), die in Zwangsbetrieb die Wärmepumpe während Perioden verminderten Tarifs des elektrischen Verteilernetzes legt, bis eine Temperatursonde (S2) im Wärmespeicherbehälter (16) für hohe Temperatur eine Ausgangsgröße liefert, die repräsentativ für eine Maximaltemperatur (Tmax) ist.

2. Klimaanlage nach Anspruch 1, dadurch gekennzeichnet, daß ein Mischventil mit drei Wegen (27) und Proportionalwirkung einerseits zwischen diesem Hochtemperaturbehälter (16) und diesem Heiznetz und andererseits im Nebenschluß zwischen Eingang und Ausgang des letzteren gelegt ist, wobei dieses Ventil von einem Steuerkreis (57) betätigbar ist, das vermittels einer Temperatursonde (53) (hilfs)gesteuert wird, die in thermischem Kontakt mit einem gewählten Punkt dieses Heiznetzes steht.

3. Klimaanlage nach einem der Ansprüche 1 und 2, dadurch gekennzeichnet, daß sie des weiteren über eine Temperatursonde (55) verfügt, die in diesem Niedrigtemperaturwärmespeicherbehälter (14) angeordnet ist, über eine Temperatursonde (S4) verfügt, die in dieser Gruppe (13) von Solarzellen angeordnet ist, wobei eine Zirkulationspumpe (20) in diesen Fluidwärmeträgerkreis (19) eingesetzt ist und Steuereinrichtungen für diese Zirkulationspumpe (59, 60) vorgesehen sind, die so ausgebildet sind, daß diese nur dann arbeitet, wenn die Differenz der durch diese beiden Sonden (S4, S5) ermittelten Temperaturen zwischen zwei vorbestimmten Werten liegt.

4. Klimaanlage nach einem der vorhergehenden Ansprüche, dadurch gekennzeichnet, daß verbundene Heizeinrichtungen, beispielsweise ein Feuerraumkessel, mit diesem Hochtemperaturspeicherbehälter (16) in Wärmekopplung stehen.

5. Klimaanlage nach einem der Ansprüche 1 bis 4, dadurch gekennzeichnet, daß eine solche genannte Wärmeaufnehmereinrichtung gebildet wird durch den Niedertemperaturspeicherbehälter selbst, von dem eine Wand in Kontakt mit einem Lufterneuereungskreis (34, 32, 33) eines Gebäudes steht.

6. Klimaanlage nach Anspruch 5, dadurch gekennzeichnet, daß dieser Lufterneuerungskreis Ventilationseinrichtungen mit variablem Durchsatz (55, 56, 34) als Funktion der Außentemperatur umfaßt.

7. Klimaanlage nach einem der vorhergehenden Ansprüche, dadurch gekennzeichnet, daß ein Behälter mit großem Wärmeaustauschvermögen (30) in diesen Niedertemperaturspeicherbehälter (14) taucht und mit einer Flüssigkeit von einem Gefrierpunkt gefüllt ist, der höher als derjenige der im Behälter (14) enthaltenen Flüssigkeit ist.

8. Klimaanlage nach einem der vorhergehenden Ansprüche, dadurch gekennzeichnet, daß ein Sanitärwasserkessel (38) in diesen Hochtemperaturspeicherbehälter (16) taucht und in Wärmekontakt mit der in diesem enthaltenen Flüssigkeit steht.

9. Klimaanlage nach Anspruch 8, dadurch gekennzeichnet, daß ein oberer Teil des Sanitärwarmwasserkessels mit einem Wärmeisolierüberzug (42) bedeckt ist.

10. Klimaanlage nach einem der vorhergehenden Ansprüche, dadurch gekennzeichnet, daß diese Wärmepumpe (11) vom Wasser-Wasser-Typ ist, daß die in dem Niedertemperaturbehälter (14) enthaltene Flüssigkeit Wasser ist, das im Primärkreis (15) der Wärmepumpe zirkuliert und gegebenenfalls glykolhaltiges Wasser ist und daß die Flüssigkeit des Hochtemperaturbehälters (16) auch Wasser ist, welches in diesem Sekundärkreis (17) der Wärmepumpe zirkuliert.

**Claims**

1/ An air-conditioning installation, e.g. for a building, the installation comprising a heating network (12) for heat-conveying fluid flow fed from a high temperature heat storage tank (16), a heat pump (11) connecting the high temperature heat storage tank (16) to a low temperature heat storage tank (14), and heat collecting means (13), such as an arrangement of solar collectors, connected by a heat-conveying fluid circuit (19) to the low temperature heat storage tank, the installation being characterized in that the heat pump (11) and pumps (22, 24) for pumping the fluids in the tanks (14, 16) through the primary and secondary circuits respectively of the heat pump are controlled by a switch-on control circuit comprising a temperature probe (52) placed in the high temperature tank (16) and means (45) for comparing the output magnitude from said probe with a magnitude (Tmin) representative of a minimum temperature, and by a switch-off control circuit comprising a temperature probe (S2) (which may optionally be the same as the above-specified probe) and means (46) for comparing the output magnitude from said probe with a magnitude representative of the minimum temperature (Tmin) plus a predetermined offset value, the installation further including means, such as an inverting amplifier (55) connected to a temperature probe (SI) placed outside the construction, for varying said minimum temperature (Tmin) as an inverse function of the outside temperature, and means (51, 50) for forcing operation of the heat pump during low tariff periods of the main electricity network until a temperature probe (S2) placed in the high temperature heat storage tank provides an output magnitude representative of a maximum temperature (Tmax).

2/ An installation according to claim 1, characterized in that a three-path proportional-acting mixer valve (27) is connected firstly between said high temperature storage tank (16) and said heating network, and secondly as a shunt between the inlet and the outlet of said network, said valve being controlled by a control circuit (57) controlled by a temperature probe (S3) in thermal contact with a selected point of said heating network.

3/ An installation according to claim 1 or claim 2, characterized in that it further includes a temperature probe (55) placed inside said low temperature heat storage tank (14), a temperature probe (54) placed in said arrangment of solar collectors (13), a fluid circulating pump (20) inserted in said heat-conveying fluid circuit (19), and means (59, 50) for controlling said fluid circulating pump and arranged to cause said pump to operate only when the difference between the temperatures detected by said probes (54, 55) lies between two predetermined values.

4/ An installation according to any preceding claim, characterized in that auxiliary heating means, e.g. a fireplace boiler, are thermally coupled to said high temperature heat storage tank (16).

5/ An air conditioning installation according to any one of claims 1 to 4, characterized in that the low temperature heat storage tank has a wall in contact with an air-renewal circuit (34, 32, 33) of a building and itself constitutes a heat collecting means as specified above.

6/ An installation according to claim 5, characterized in that said air-renewal circuit includes fan means (55, 56, 34) providing a variable flow rate as a function of the outside temperature.

7/ An installation according to any preceding claim, characterized in that a container having a large heat-exchange area (30) is immersed in said low temperature heat storage tank (14) and is filled with liquid having a higher freezing point than the liquid contained in the tank (14).

5/ An installation according to any preceding claim, characterized in that a hot tap water tank (35) is immersed in said high temperature heat storage tank (16) and is in thermal contact with the liquid contained therein.

9/ An installation according to claim 5, characterized in that a top portion of said hot tap water tank is covered with a thermally insulating covering (42).

10/ An installation according to any preceding claim, characterized in that the said heat exchanger (11) is a water-water type of heat exchanger, in that the liquid contained in the low temperature tank (14) is water flowing through the primary circuit (15) of the heat exchanger, and may optionally be water containing glycol, and in that the liquid in the high temperature tank (16) is likewise water and flows through the secondary circuit (17) of the heat exchanger.

FIG.1

FIG.2

FIG.3

0 1 1 7 796

FIG.4